# EUROPÄISCHE PATENTSCHRIFT

(11) **EP 1 549 190 B1**
(45) Veröffentlichungstag und Bekanntmachung des Hinweises auf die Patenterteilung: **19.09.2007**
(21) Anmeldenummer: 03808696.3
(22) Anmeldetag: 22.09.2003
(51) Int. Cl.: A47J 43/07

(54) **Küchengerät mit einer Kupplungsvorrichtung**
Kitchen appliance with a coupling device
Utensile de cuisine avec un dispositif d'accouplement

(30) Priorität: 25.09.2002 DE 10244602
(43) Veröffentlichungstag der Anmeldung: 06.07.2005
(73) Patentinhaber: BSH Bosch und Siemens Hausgeräte GmbH, 81739 München (DE)
(72) Erfinder: BREZOVNIK, Peter, 3330 Mozirje (SI); PAVLOVIC, Henrik, Ljubno ob Savin 3333 (SI); ZIBRET, Igor, 3327 Smartno ob Paki (SI)
(86) Internationale Anmeldenummer: PCT/EP2003/010528
(87) Internationale Veröffentlichungsnummer: WO 2004/034862

(56) Entgegenhaltungen:
- DE-A- 4 128 456
- US-A- 4 093 055
- US-A- 4 854 923

## Beschreibung

Die vorliegende Erfindung betrifft ein Küchengerät insbesondere einen Chopper oder ein Rührgerät, mit einer Kupplungsvorrichtung zum Kuppeln eines in einen Behälter ragenden Arbeitswerkzeugs an eine Antriebs einheit mit einer ersten Kupplungskomponente, die mindestens eine erste Mitnehmereinrichtung aufweist und einer zweiten Kupplungskomponente, die mindestens eine zweite Mitnehmereinrichtung zum drehfesten Eingriff in die mindestens eine erste Mitnehmereinrichtung aufweist und die koaxial an die erste Kupplungskomponente koppelbar ist,, sowie einer Einrichtung zur Erzeugung einer axialen Kraftkomponente, welche das über die Kupplungsvorrichtung angetriebene Arbeitswerkzeug nach unten an die Bodenplatte des Behälters drückt. Darüber hinaus offenbart ist ein Arbeitswerkzeug für ein Küchengerät.

Ein gattungsbildendes Küchengerät bzw. Haushaltsgerät ist beispielsweise aus der DE 41 28 456 A bekannt.

Zu derartigen Haushaltsgeräten zählen auch sogenannte Chopper (Zerhacker), mit denen gröbere Bestandteile von Lebensmitteln zerkleinert und gegebenenfalls zu Mus verarbeitet werden können. Die Chopper können aber auch zum Mischen von flüssigen beziehungsweise breiartigen Lebensmitteln sowie zum Schlagen von Sahne und dergleichen verwendet werden.

Der Aufbau eines Choppers besteht typischerweise aus einem schüsselartigen Behältnis und einer mit hoher Drehzahl rotierenden Funktionseinheit (Arbeitswerkzeug), die in der Regel am Boden des Behältnisses angeordnet ist. Der Antrieb dieser Funktionseinheit beziehungsweise dieses Werkzeugs kann unterhalb oder oberhalb des Behältnisses vorgesehen sein. Das Behältnis wird meist mit einem Deckel verschlossen, um ein Herausspritzen aus dem Behältnis zu vermeiden.

Küchengeräte zum Rühren oder Zerkleinern von Lebensmitteln können mit unterschiedlichen Arbeitswerkzeugen bestückt werden. Zum Austausch dieser Werkzeuge ist eine Kupplung vorgesehen, die das Drehmoment von einer Antriebseinheit auf das Arbeitswerkzeug überträgt und darüber hinaus leicht bedienbar ist.

Ein derartiges Küchengerät ist aus der deutschen Patentschrift DE 44 14 415 C1 bekannt. Dort ist ein Zusatzgerät für einen elektrisch betriebenen Handrührer beschrieben, in das ein über eine Kupplung betriebenes Arbeitswerkzeug eingesetzt ist. Der Deckel des Zusatzgeräts dient zur Aufnahme eines Getriebes. Dieses dient als Untersetzungsgetriebe und überträgt die an der Abtriebswelle vom Handrührer eingeleitete Drehung zu einem am Bodenteil des Getriebes hervorragenden Abtrieb, von wo sie wiederum auf die Messer übertragen wird. Der Abtrieb besteht aus am Umfang ausgebildeten Vorsprüngen mit dazwischenliegenden Ausnehmungen, in die beim Aufsetzen des Getriebeaufsatzes auf den Behälter des Zusatzgeräts die am freien Ende des Arbeitswerkzeugs nach oben erstreckenden Mitnehmer zur drehfesten Mitnahme eingreifen.

Während des Betriebs des Arbeitswerkzeugs, d. h. bei dessen Drehung, kann dieses vom Boden des Behälters des Küchengeräts nach oben wandern. Dieses Problem wurde auch in der zuletzt genannten Druckschrift erkannt, weswegen dort das freie Ende des Abtriebs an einem am freien Ende des Arbeitswerkszeugs hervorstehenden Noppen anliegt. Ferner heißt es dort, dass dazwischen auch ein geringes Luftspiel vorhanden sein kann, wichtig ist nur, dass das Arbeitswerkzeug im Betrieb nicht allzu viel Spiel und somit allzu weit nach oben wandern kann.

Das Problem des Nachobenwandems des Arbeitswerkzeugs ist auch in der gattungsbildenden deutschen Offenlegungsschrift DE 41 28 456 A1 behandelt. Dort ist ebenfalls ein Zerkleinerungsgerät für eine elektrische Küchenmaschine beschrieben. Wird der Deckel des Geräts auf den Behälter aufgesetzt, so greift eine Längsverzahnung in die am Arbeitswerkzeug ausgebildete, entsprechende Verzahnung ein, bis die am Aufnahmeteil ausgebildete Stirnfläche an der Stirnfläche des Arbeitswerkzeugs anschlägt. Bevor der Deckel ordnungsgemäß auf dem Rand des Behälters aufsitzt, wird das Arbeitswerkzeug entgegen der Kraft einer Feder zum Boden des Behälters hin verschoben. Das Arbeitswerkzeug wird damit während des Betriebs durch die Feder stets in das darüber befindliche Aufnahmeteil gedrückt.

Schließlich sei noch auf die US 4,093,055 A sowie die US 4,854,923 A hingewiesen.

Die Aufgabe der vorliegenden Erfindung besteht darin, eine Vorrichtung vorzuschlagen, bei der das Arbeitswerkzeug eines Küchengeräts während des Betriebs in einem Behälter in aller Regel nicht vom Boden des Behälters nach oben wandern kann.

Erfindungsgemäß wird diese Aufgabe durch ein Küchengerät mit einer Kupplungsvorrichtung nach dem Oberbegriff von Patentanspruch 1 gelöst, welches sich dadurch auszeichnet, dass die erste und/oder zweite Kupplungskomponente zur Erzeugung der axialen Kraftkomponente aus einem Drehmoment ausgebildet ist.

Vorzugsweise besitzen/besitzt die erste und/oder zweite Mitnehmereinrichtung eine zur gemeinsamen Achse beider Kupplungskomponenten geneigte Fläche, so dass bei Übertragung eines Drehmoments die beiden Kupplungskomponenten in axialer Richtung voneinander gedrückt werden. Die geneigte Fläche der ersten und/oder zweiten Mitnehmereinrichtung sollte zur Drehachse einen Winkel von 5° bis 15°, insbesondere 10°; aufweisen, damit die axiale Kraft hinreichend groß ist und dennoch ein gewisses Maß nicht übersteigt.

Bei einer vorteilhaften Ausgestaltung umfasst die erste Mitnehmereinrichtung eine keilförmige Vertiefung am Umfang der ersten Kupplungskomponente und die zweite Mitnehmereinrichtung eine Erhebung am Umfang der zweiten Kupplungskomponente. Die Drehmomentübertragung kann aber auch an den Stirnseiten der beiden Mitnehmereinrichtungen erfolgen. Hierzu umfasst die erste Mitnehmereinrichtung eine Vertiefung an der der zweiten Kupplungskomponente gegenüberliegenden Seite der ersten Kupplungskomponente und die zweite Mitnehmereinrichtung eine Erhebung an der der ersten Kupplungskomponente gegenüberliegenden Seite der zweiten Kupplungskomponente.

Vorliegend offenbart ist auch ein Arbeitswerkzeug, insbesondere ein Drehmesser oder eine Schlagscheibe, für ein Küchengerät. Das Arbeitswerkzeug kann vorteilhafterweise mit einer der genannten Kupplungskomponenten, gegebenenfalls auch einteilig, verbunden sein. Das Küchengerät selbst, zum Beispiel ein Chopper, ist dann mit der entsprechenden anderen Kupplungskomponente, die mit einer Antriebseinheit verbunden ist, ausgestattet.

In jedem Fall ergibt sich durch die Erfindung bei der Übertragung eines Drehmoments der Vorteil, dass durch die schräge beziehungsweise geneigte Fläche einer oder beider Kupplungskomponenten eine Kraft in axialer Richtung entsteht, so dass das mit der Kupplungsvorrichtung angetriebene Arbeitswerkzeug entweder nach unten an die Bodenplatte eines Behälters oder nach oben gegen die Antriebseinheit gedrückt wird. Eine ungewollte axiale Bewegung des Arbeitswerkzeugs wird auf diese Weise während des Betriebs größtenteils verhindert.

Die vorliegende Erfindung wird nun anhand der beigefügten Zeichnungen näher erläutert, in denen zeigen:
- Figur 1: eine Querschnittsansicht eines erfindungsgemäß ausgestalteten Choppers; und
- Figur 2: eine Draufsicht auf eine erfindungsgemäße Kupplungsvorrichtung.

Das nachfolgend beschriebene Ausführungsbeispiel stellt eine bevorzugte Ausführungsform der vorliegenden Erfindung dar.

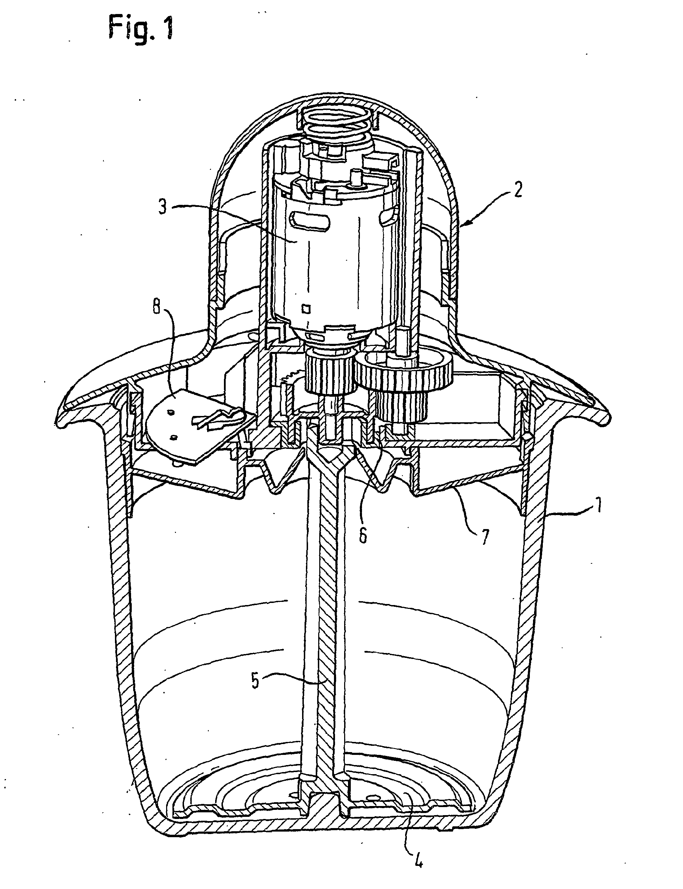

Figur 1 zeigt einen Querschnitt durch einen Chopper. Der Chopper umfasst eine Schüssel 1 und einen Deckel 2. Der Deckel 2 dient nicht nur zum Abdichten der Schüssel 1 sondern beinhaltet gleichzeitig einen elektrischen Kleinmotor 3 einschließlich Getriebe zum Antrieb einer Schlagscheibe 4, die am Boden der Schüssel 1 drehbar gelagert ist. Eine Welle 5 überträgt das Drehmoment vom Getriebe des Elektromotors 3 zu der Schlagscheibe 4. Die Schlagscheibe 4 dient beispielsweise zum Schlagen von Eiklar oder Sahne.

Die Lagerung der Welle 5 in dem Deckel 2 unterhalb des Getriebes des Elektromotors 3 erfolgt durch ein Axial/Radial-Gleitlager 6.

An der Unterseite des Deckels zum Inneren der Schüssel zugewandt befindet sich ein Deckabschnitt 7. Dieser Deckabschnitt dient zum Abdecken beziehungsweise Abdichten des in der Schüssel 1 befindlichen fließenden Mediums, wie Flüssigkeiten, Brei, Eiswürfel, etc. Der Deckabschnitt 7 ist zur Durchführung der Welle 5 im Zentrum durchbrochen.

Der Deckel 2 weist ferner einen integrierten Schalter 8 auf, der mit einer Sicherheitsfunktion ausgestattet ist. Erst wenn der Deckel 2 auf die Schüssel 1 ordnungsgemäß aufgebracht ist, erlaubt dieser Sicherheitsschalter 8 den Betrieb des Choppers.

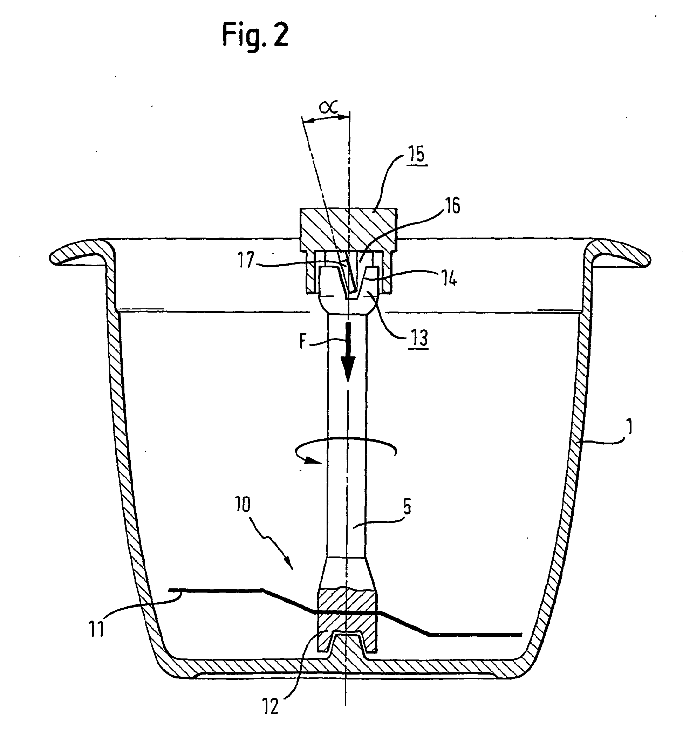

In Figur 2 ist eine Ausführungsform der erfindungsgemäßen Kupplung im Detail wiedergegeben. In der Schüssel 1 des Choppers befindet sich ein Drehmesser 10 bestehend aus einem Schaft 5 als Antriebswelle und einem Messer 11, das an einem Schaftende in den Schaft 5 eingearbeitet ist. Ebenfalls an diesem Ende des Schafts 5 befindet sich ein Radial-/Axiallager 12, mit dem das Drehmesser 10 im Zentrum des Bodens der Schüssel 1 gleitend gelagert ist.

An der dem Lager 12 gegenüberliegenden Seite des Schafts 5 befindet sich drehfest verbunden eine Kupplungskomponente 13 zum Antrieb des Schafts 5. Diese Kupplungskomponente 13 besitzt im Wesentlichen die Form eines oben offenen Hohlzylinders mit einer keilförmigen Vertiefung beziehungsweise Aussparung 14. Diese Aussparung beziehungsweise Vertiefung 14 durchbricht die gesamte Wandstärke der hohlzylinderförmigen Kupplungskomponente 13. Der halbe Keilwinkel der Vertiefung 14 gegenüber der Achse des Schafts 5 ist mit dem Winkel α bezeichnet.

Das Drehmesser 10 wird durch eine Antriebseinrichtung (nicht dargestellt) in Drehung versetzt. Hierzu besitzt die Antriebseinrichtung eine Abtriebskupplungskomponente 15, die mit der Kupplungskomponente 13 zusammenwirkt. Die Abtriebskupplungskomponente 15 umfasst einen Wellenstumpf 16, der in den Hohlzylinder der Kupplungskomponente 13 reicht. Am Außenumfang des Wellenstumpfs 16 ist ein Mitnehmer 17 angeordnet. Dieser längliche Mitnehmer 17 ist mit seiner Längsachse ebenfalls im Winkel α zur Achse des Schafts 5 geneigt. Der Winkel α liegt hier bei 10°. Der Mitnehmer 17 ragt in die Vertiefung 14, so dass eine drehfeste Kopplung zwischen der Kupplungskomponente 13 und der Abtriebskupplungskomponente 15 erreicht wird. Somit kann von der Antriebseinheit des Küchengeräts auf das Drehmesser 10 ein Drehmoment übertragen werden.

Beim Betrieb des Drehmessers 10 wird auf den Schaft 5 nicht nur ein Drehmoment übertragen, sondern durch die um den Winkel α geneigte Fläche des Mitnehmers 17 und die ebenfalls um den Winkel α geneigte Fläche der keilförmigen Vertiefung 14 auch eine axiale Kraft auf die Kupplungskomponente 13 beziehungsweise den damit verbundenen Schaft 5 ausgeübt. D.h. das Drehmoment wird teilweise in eine axiale Kraftkomponente gewandelt. Diese Kraft wirkt gemäß Figur 2 nach unten, d. h. von der Abtriebskupplungskomponente 15 weg zum Boden der Schüssel 1. Dies bedeutet, dass der Schaft 5 und damit das Drehmesser 10 in das Gleitlager 12 gedrückt wird. Dadurch kann verhindert werden, dass das Drehmesser 10 während des Betriebs aufgrund des Widerstands des Messers 11 gegenüber den zu zerkleinernden Lebensmittelteilchen nach oben wandert.

Es genügt, wenn entweder die Antriebskupplungskomponente 13 oder die Abtriebskupplungskomponente 15 eine Mitnehmerfläche besitzt, die gegenüber der Achse des Schafts 5 geneigt ist. Diese Neigung verursacht, dass das Drehmoment der Abtriebskupplungskomponente auch in eine axiale Kraftkomponente für die Abtriebskupplungseinheit 13 gewandelt wird. Somit ist es beispielsweise möglich, dass der Mitnehmer 17 kreiszylinderförmig ist und aus dem Umfang des Wellenstumpfs 16 in die Vertiefung 14 mit schräger Fläche ragt. Ferner ist es denkbar, dass die Mitnehmereinrichtung der Antriebskupplungskomponente 13 beliebig zur Achse des Schafts orientiert ist und nur die Mitnehmereinrichtung 17 der Abtriebskupplungskomponente 15 gegenüber der Achse des Schafts 5 geneigt ist.

Der Wellenstumpf 16 an der Abtriebskupplungskomponente 15 kann am Umfang verteilt auch zwei, drei oder mehr Mitnehmer aufweisen. In diesem Fall besitzt auch die Antriebskupplungskomponente 13 eine entsprechende Anzahl an Vertiefungen beziehungsweise Mitnehmereinrichtungen 14.

## Patentansprüche

1. Küchengerät mit einer Kupplungsvorrichtung zum Kuppeln eines in einen Behälter ragenden Arbeitswerkzeugs an eine Antriebseinheit mit
einer ersten Kupplungskomponente (13), die mindestens eine erste Mitnehmereinrichtung (14) aufweist, und
einer zweiten Kupplungskomponente (15), die mindestens eine zweite Mitnehmereinrichtung (17) zum drehfesten Eingriff in die mindestens eine erste Mitnehmereinrichtung (14) aufweist und die koaxial an die ersten Kupplungskomponente (13) koppelbar ist, sowie einer Einrichtung zur Erzeugung einer axialen Kraftkomponente, welche das über die Kupplungsvorrichtung angetriebene Arbeitswerkzeug nach unten an die Bodenplatte des Behälters drückt,
**dadurch gekennzeichnet, dass**
die erste und/oder zweite Kupplungskomponente (13, 15) zur Erzeugung der axialen Kraftkomponente aus einem Drehmoment ausgebildet ist.

2. Küchengerät nach Anspruch 1, wobei die erste und/oder zweite Mitnehmereinrichtung (14, 17) eine zur gemeinsamen Achse beider Kupplungskomponenten (13, 15) geneigte Fläche als Einrichtung zur Erzeugung einer axialen Kraftkomponente aus einem Drehmoment besitzen/besitzt, so dass bei Übertragung eines Drehmoments die beiden Kupplungskomponenten (13, 15) in axialer Richtung voneinander gedrückt werden.

3. Küchengerät nach Anspruch 2, wobei die erste Mitnehmereinrichtung (14) eine keilförmige Vertiefung am Umfang der ersten Kupplungskomponente (13) und die zweite Mitnehmereinrichtung (17) eine Erhebung am Umfang der zweiten Kupplungskomponente (15) umfasst.

4. Küchengerät nach Anspruch 2 oder 3, wobei die erste Mitnehmereinrichtung (14) eine Vertiefung an der der zweiten Kupplungskomponente (15) gegenüberliegenden Seite der ersten Kupplungskomponente (13) und die zweite Mitnehmereinrichtung (17) eine Erhebung an der der ersten Kupplungskomponente (13) gegenüberliegenden Seite der zweiten Kupplungskomponente (15) umfasst.

5. Küchengerät nach einen der Ansprüche 1 bis 4, wobei die erste oder zweite Kupplungskomponente (13, 15) mit einer Antriebswelle (5) einer Funktionseinheit (10) des Küchengeräts verbunden ist.

6. Küchengerät nach einem der Ansprüche 2 bis 5, wobei die geneigte Fläche der ersten und/oder zweiten Mitnehmereinrichtung zur Drehachse einen Winkel von 5° bis 15°, insbesondere 10°, aufweist.

## Claims

1. Kitchen appliance with a coupling device for coupling a work tool, which protrudes into a container, to a drive unit, with a first coupling component (13), which has at least one first entrainer device (14), and a second coupling component (15), which has at least one second entrainer device (17) for rotationally fast engagement in the at least one first entrainer device (14) and which can be coaxially coupled to the first coupling component (13), as well as a device for producing an axial force component which urges the work tool, which is driven by way of the coupling device, downwardly against the base plate of the container, **characterised in that** the first and/or second coupling component (13, 15) is or are constructed for generating the axial force component from a torque.

2. Kitchen appliance according to claim 1, wherein the first and/or second entrainer device (14, 17) has or have a surface, which is inclined relative to the common axis of the two coupling components (13, 15), as device for generating an axial force component from a torque, so that on transmission of a torque the two coupling components (13, 15) are urged apart in axial direction.

3. Kitchen appliance according to claim 2, wherein the first entrainer device (14) has a wedge-shaped depression at the circumference of the first coupling component (13) and the second entrainer device (17) has an elevation at the circumference of the second coupling component (15).

4. Kitchen appliance according to claim 2 or 3, wherein the first entrainer device (14) has a depression at the side of the first coupling component (13) opposite the second coupling component (15) and the second entrainer device (17) has an elevation at the side of the second coupling component (15) opposite the first coupling component (13).

5. Kitchen appliance according to one of claims 1 to 4, wherein the first or second coupling component (13, 15) is connected with a drive shaft (5) of a functional unit (10) of the kitchen appliance.

6. Kitchen appliance according to one of claims 2 to 5, wherein the inclined surface of the first and/or second entrainer device has an angle of 5° to 15°, particularly 10°, relative to the axis of rotation.

## Revendications

1. Appareil de cuisine doté d'un dispositif d'accouplement qui accouple à une unité d'entraînement un outil de travail qui s'enfonce dans un récipient et qui comprend :
un premier composant d'accouplement (13) qui est doté d'au moins un premier dispositif d'entraînement (14) et
un deuxième composant d'accouplement (15) qui présente au moins un deuxième dispositif d'entraînement (17) qui s'engage à rotation solidaire dans l'au moins un premier dispositif d'entraînement (14) et qui peut être accouplé coaxialement au premier composant d'accouplement (13), ainsi qu'un dispositif qui crée une composante de force axiale qui repousse l'outil de travail entraîné par le dispositif d'accouplement vers le bas contre la plaque de fond du récipient,
**caractérisé en ce que**
le premier et/ou le deuxième composant d'accouplement (13, 15) sont configurés pour créer la composante de force axiale à partir d'un couple de rotation.

2. Appareil de cuisine selon la revendication 1, dans lequel le premier et/ou le deuxième dispositif d'entraînement (14, 17) possèdent comme dispositif de création d'une composante de force axiale à partir d'un couple de rotation une surface inclinée par rapport à l'axe commun des deux composants d'accouplement (13, 15), de telle sorte que lors de la transmission d'un couple de rotation, les deux composants d'accouplement (13, 15) se repoussent mutuellement dans la direction axiale.

3. Appareil de cuisine selon la revendication 2, dans lequel le premier dispositif d'entraînement (14) comprend un creux en forme de biseau à la périphérie du premier composant d'accouplement (13) et le deuxième dispositif d'entraînement (17) une saillie à la périphérie du deuxième composant d'accouplement (15).

4. Appareil de cuisine selon les revendications 2 ou 3, dans lequel le premier dispositif d'entraînement (14) comprend un creux sur le côté du premier composant d'accouplement (13) opposé au deuxième composant d'accouplement (15) et le deuxième dispositif d'entraînement (17) comprend une saillie sur le côté du deuxième composant d'accouplement (15) opposé au premier composant d'accouplement (13).

5. Appareil de cuisine selon l'une des revendications 1 à 4, dans lequel le premier ou le deuxième composant d'accouplement (13, 15) est relié à l'arbre d'entraînement (5) d'une unité fonctionnelle (10) de l'appareil de cuisine.

6. Appareil de cuisine selon l'une des revendications 2 à 5, dans lequel la surface inclinée du premier et/ou du deuxième dispositif d'entraînement forme avec l'axe de rotation un angle de 5° à 15° et en particulier de 10°.
